(19) **Europäisches Patentamt / European Patent Office / Office européen des brevets**

(11) **EP 2 799 211 A1**

(12) ## EUROPEAN PATENT APPLICATION
published in accordance with Art. 153(4) EPC

(43) Date of publication:
**05.11.2014 Bulletin 2014/45**

(51) Int Cl.:
**B29C 65/02** (2006.01)    **B29K 105/06** (2006.01)
**B29K 307/04** (2006.01)

(21) Application number: **12862610.8**

(22) Date of filing: **26.12.2012**

(86) International application number:
**PCT/JP2012/083703**

(87) International publication number:
**WO 2013/099971 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 JP 2011285610**

(71) Applicant: **Teijin Limited**
**Osaka-shi, Osaka 541-0054 (JP)**

(72) Inventor: **KATO, Takumi**
**Matsuyama-shi, Ehime 791-8044 (JP)**

(74) Representative: **Carpmaels & Ransford LLP**
**One Southampton Row**
**London WC1B 5HA (GB)**

(54) **METHOD FOR JOINING COMPOSITE MATERIALS**

(57) Provided is a method for joining composite materials including a thermoplastic resin as a matrix resin and carbon fibers, by which the composite materials can be easily joined to each other to attain good bond strength.

The method for joining composite materials includes:
(i) a step in which a composite material A including a thermoplastic resin and carbon fibers and having a protrusion part on one surface thereof and a composite material B including a thermoplastic resin and carbon fibers are layered and fixed so that the protrusion part of the composite material A faces inward; and
(ii) a step in which a current is applied to a joining portion including the protrusion part to generate heat.

## FIG.1

**Description**

Technical Field

The present invention relates to a method for joining composite materials which include a thermoplastic resin as a matrix and carbon fibers. More particularly, the invention relates to a method by which a composite material including a thermoplastic resin and carbon fibers and having a protrusion part is joined to another composite material.

Background Art

General methods for joining composite materials including a thermoplastic resin as a matrix include joining with adhesives, welding, fastening with a bolt and a nut, a rivet, and the like.

The joining with adhesives is unsuitable for a structural member because high joining strength is not obtained.

Techniques of welding include ones utilizing a hot plate, vibration, or ultrasonic waves. The welding is considered to be an exceedingly advantageous joining method for a thermoplastic resins because no increase in weight due to the joining and high strength is obtained by integrating materials as they are. However, welding with a hot plate has a problem in that resin adhesion to the hot plate is caused due to stringing. Vibration welding has a problem in which since fixtures for exclusive use for respective objects to be weld are necessary and joining surfaces need to be vibrated, welding technique is not adaptable to a complicated shape. The ultrasonic welding has problems in that a size of a horn is restricted, resulting in difficulty to adapt large-size objects to be welded, emitting of a high-frequency sound, or the like.

Also, the fastening with a bolt and a nut, or a rivet has problems in that since base materials need to be drilled, the base materials come to have reduced strength and process steps are increased. Moreover, a carbon fiber composite material has recently attracted attention as a material which brings about a weight reduction effect due to strength and lightweight properties thereof. However, there is a possibility that an increase in the number of portions fastened with bolts and nuts or rivets results in an increase in mass due to the increased amount of fastening components to impair the merits of using the carbon fiber composite materials.

Thus, no joining method is known which is for joining composite materials including a thermoplastic resin as a matrix and which is not affected by a size or a shape of the objects to be welded and gives high strength in a short period.

Meanwhile, in a joining of metals to each other, it is generally known that by flowing a large current through the metals for an extremely short time period, as in an electric resistance welding, the metals can be partly melted and welded to each other (patent document 1, etc.). This method is capable of joining, in a short period, shaped metals having complicated shapes and obtains a joint body having high strength. This method hence is mainly used in an automobile assembly process. A method where this technique of electric resistance welding is applied to composites including carbon fibers and a thermoplastic resin to manufacture a fusion-bonded product by varying both an amount of carbon fibers in joining portions and directions of the fibers therein is described in patent document 2.

Patent document 3 describes a method which includes sandwiching a heat generator constituted by carbon fibers between joining surfaces of thermoplastic-resin molded articles, applying a current to the heat generator while pressing the layered body at a suitable force to generate heat thereto and melt the resins of the joining surfaces, thereafter stopping the current application and cooling to fusion-bond the molded articles to each other due to hardening the resins.

Citation List

Patent Documents

Patent Document 1: JP-A-6-170551
Patent Document 2: JP-A-2009-73132
Patent Document 3: JP-A-11-300836

Summary of Invention

Problem that Invention is to be Solved

The method described in patent document 2 may have a drawback that current flows through the carbon fibers having a good electrical conductivity which are present in the thermoplastic resin, and thereby it is difficult to sufficiently heat and melt the thermoplastic resin to conduct the joining.

An object of the invention is to provide a method by which composite materials including a thermoplastic resin and carbon fibers are easily joined to each other to attain high joining strength.

Means for Solving the Problem

The present inventors has diligently made investigations and, as a result, have found that by providing a protrusion part to a composite material including a thermoplastic resin and carbon fibers, a joint body having a good joining strength may be produced therefrom.
Namely, the present invention is as follows.

[1] A method for joining composite materials, the method including:

(i) a step in which a composite material A including a thermoplastic resin and carbon fibers and having a protrusion part on one surface thereof and a composite material B including a thermoplastic resin and carbon fibers are layered and fixed so that the protrusion part of the composite material A faces inward; and
(ii) a step in which a current is applied to a joining portion including the protrusion part to generate heat.

[2] The method for joining composite materials according to [1], characterized in that the current application is conducted in a current density range of 0.01 A/mm$^2$ to 100 A/mm$^2$.
[3] The method for joining composite materials according to [1] or [2], wherein the fixing of the composite materials is conducted by pressing the composite materials with electrodes.
[4] The method for joining composite materials according to any one of [1] to [3], wherein the composite material B has a protrusion part on one surface thereof.
[5] The method for joining composite materials according to any one of [1] to [4], wherein the composite materials A and B each have a carbon fiber volume fraction (Vf = 100 × (volume of carbon fibers)/[(volume of carbon fibers)+(volume of thermoplastic resin)]) of 5 to 80%.
[6] The method for joining composite materials according to any one of [1] to [5], wherein an average fiber length of the carbon fibers in each of the composite materials A and B is 1 mm to 100 mm.
[7] The method for joining composite materials according to any one of [1] to [6], wherein in in-plane directions of the surface having the protrusion part of the composite material A, the carbon fibers have been dispersedly arranged so as to be randomly oriented.
[8] The method for joining composite materials according to any one of [1] to [7], wherein a shape of the protrusion part is at least one shape selected from the group consisting of a cylinder, a prism, a truncated cone, a truncated pyramid, and a hemisphere.

Advantages of Invention

According to the present invention, it is possible to provide a method by which composite materials including a thermoplastic resin and carbon fibers are easily joined to each other to attain high joining strength.
In the invention, a protrusion part having a shape of a projection is formed on a joining portion of the composite materials including a thermoplastic resin and carbon fibers, and a current is applied to the joining portion including the protrusion part to generate heat thereto. As a result, the composite materials can be easily welded, and a joint body in which the welded portion is stable can be obtained.
Thus, the inclusion of the protrusion part in an electrically conductive portion in the joining portion surprisingly stabilizes area of portions where thermal fusion bonding is performed, making it possible to obtain a satisfactory joint body of the carbon-fiber composite materials, which has excellent joining strength.

Brief Description of Drawings

[Fig. 1] Fig. 1 is a diagrammatic view which illustrates an example of composite materials having a protrusion part.
[Fig. 2] Fig. 2 is a diagrammatic view of a joining portion of a composite material having a protrusion part and a composite material having no protrusion part.

Embodiments for Carrying Out Invention

The method of the invention for joining composite materials includes:

(i) a step in which a composite material A including a thermoplastic resin and carbon fibers and having a protrusion part on one surface thereof and a composite material B including a thermoplastic resin and carbon fibers are layered and fixed so that the protrusion part of the composite material A faces inward; and

(ii) a step in which a current is applied to a joining portion including the protrusion part to generate heat thereto.

Here, the wording "composite materials A and B are layered and fixed so that the protrusion part of the composite material A faces inward" means that "composite materials A and B are brought into contact with each other and fixed so that the protrusion part of the composite material A faces the composite material B".

The expression "a joining portion including the protrusion part" means "a region including the area where the protrusion part of the composite material A is in contact with the composite material B", and this region is welded by heat generation due to the current application to be a joined portion.

Meanwhile, it is a matter of course that the present invention may include a step for preparing the composite materials A and B.

Embodiments of the invention are explained below.

[Composite Material A]

A composite material A used in the invention is a member including a thermoplastic resin and carbon fibers and having a protrusion part on one surface thereof. The composite material A preferably is a carbon-fiber-including composite material obtained by incorporating carbon fibers into a thermoplastic resin serving as a matrix.

<Thermoplastic Resin>

The thermoplastic resin used in the composite material according to the invention is not particularly limited, and examples thereof include polyamide (e.g., nylon-6 and nylon-66), polycarbonate, polyoxymethylene, polyphenylene sulfide, polyphenylene ether, polyester (e.g., polyethylene terephthalate, polybutylene terephthalate, and polyethylene naphthalate), polyethylene, polypropylene, polystyrene, polymethyl methacrylate, AS resin, ABS resin, and the like. These resins may be used as a mixture of two or more thereof.

The thermoplastic resin used in the composite material according to the invention preferably is polyamide, polyester, polypropylene, polycarbonate, or polyphenylene sulfide from the standpoints of heat resistance, impact resistance, weatherability, chemical resistance, moldability, strength, cost, and a balance among these.

<Carbon Fiber>

In the invention, the composite material includes carbon fibers. As a result, a joint body of the composite materials, such as a component having high strength and high rigidity with lightweight, can be obtained. The carbon fibers may have undergone a surface treatment such as a treatment with a coupling agent, a treatment with a sizing agent, or an adhesion treatment with an additive.

The carbon fibers have an average fiber diameter of preferably 3 to 12 $\mu$m, more preferably 5 to 7 $\mu$m. The carbon fibers may be used alone, or two or more kinds of the carbon fibers differing in diameter may be used in combination.

A form of the carbon fibers contained in the composite material is not particularly limited, and the carbon fibers may be a continuous fiber or a discontinuous fiber. In the case of the continuous fiber, examples of the form include a unidirectional base material constituted by unidirectionally aligned carbon fibers, and a nonwoven fabric. However, the continuous fibers are not limited to these examples. In the case of the discontinuous fiber, there are no particular limitations on a fiber length. In most cases, the carbon fibers used are ones to which a sizing agent is adherent. It is preferable that an amount of the adherent sizing agent is 0.01 to 10 parts by mass per 100 parts by mass of the carbon fibers.

In the case of using the discontinuous carbon fiber, it is preferable that the carbon fibers are arranged so as to overlap in an isotropically and randomly dispersed state in the composite material. Namely, it is preferable that the carbon fibers are dispersedly arranged to be randomly oriented in in-plane directions on one surface of the composite material A in a sheet form. By thus dispersing carbon fibers, an area where thermal fusion bonding is conducted is rendered especially stable and a good joint body of the carbon fiber composite materials, the joint body having a stable strength of the joined portion can be obtained.

In this case, a fiber length of the carbon fibers is preferably 1 mm or more and 100 mm or less, more preferably 5 mm or more and 100 mm or less, even more preferably larger than 5 mm and less than 100 mm, in terms of average fiber length. The upper limit of the average fiber length thereof is preferably 50 mm. Although it is preferable that the carbon fibers to in the invention have an average fiber length within that range, the carbon fibers may include discontinuous fibers having a length less than 1 mm and discontinuous fibers longer than 100 mm in an amount of 20% by mass or less based on the all carbon fibers. However, it is preferable from the standpoint of joining strength that the carbon fibers include substantially no discontinuous fibers having a length less than 1 mm or having a length exceeding 100 mm.

The carbon fibers have a single-fiber fineness of preferably 100 to 5,000 dtex, more preferably 1,000 to 2,000 dtex. Furthermore, in the case of carbon fibers, continuous fibers constituted by a substantially non-twisted yarn (strand) bundled by 3,000 to 6,000 filaments or short fiber bundles obtained by cutting the strand.

<Ratio of Thermoplastic Resin to Carbon Fiber>

As a content ratio of the thermoplastic resin and the carbon fibers in the composite material used in the invention, it is preferable that the thermoplastic resin is contained in an amount of 50 to 1,000 parts by mass per 100 parts by mass of the carbon fibers. The amount of the thermoplastic resin is more preferably 50 to 400 parts by mass per 100 parts by mass of the carbon fibers, and the amount of the thermoplastic resin is even more preferably 50 to 100 parts by mass per 100 parts by mass of the carbon fibers. By satisfying the ratio, satisfactory moldability is obtained, and the joint body finally obtained has high mechanical strength.

The composite material may contain various additives so long as the inclusion thereof does not defeat the purposes of the invention (for example, the amount thereof is up to 20% by mass of the whole). Examples of the additives include a flame retardant, a heat stabilizer, an ultraviolet absorber, a nucleating agent, and a plasticizer.

The volume fraction of the carbon fibers in the composite material ($Vf = 100 \times$ (volume of carbon fibers)/[(volume of carbon fibers)+(volume of thermoplastic resin)]) is not particularly limited. However, it is desirable that the volume fraction is 5 to 80% from the standpoint of strength.

With respect to a method for manufacturing the composite material A, this composite material can be manufactured by a method such as a press molding, an injection molding, and an extrusion molding. Especially where a shaped article having highly excellent mechanical strength is to be obtained by the invention, a composite material which includes the discontinuous carbon fibers in a state of fiber bundles is preferred. It is more desirable that the composite material includes carbon fiber bundles constituted by a specific number of carbon fibers or more, and opened carbon fibers in a specific ratio, which are obtained by controlling degree of carbon-fiber opening. Namely, it is preferable that in the composite material used in the invention, a ratio of a carbon fiber bundle (A) constituted by the carbon fibers of a critical number of single fiber or more, the critical number being defined by the following expression (1) to all the carbon fibers is 20 vol% or more and 99 vol% or less in terms of volume ratio, from the standpoint of obtaining better mechanical strength.

$$\text{Critical number of single fiber} = 600/D \qquad (1)$$

(Here, D is the average fiber diameter ($\mu$m) of single carbon fibers.)

In the composite material, fibers in a state of single fiber or fiber bundles constituted by single fibers less than the critical number of single fiber may be present as carbon fibers other than the carbon fiber bundle (A). The ratio of the carbon fiber bundle (A) used in the case of obtaining a shaped product having highly excellent mechanical properties is more preferably 30 vol% or more and less than 90 vol%, and is even more preferably 30 vol% or more and less than 80 vol%.

Furthermore, it is preferable that the average number of fibers (N) in the carbon fiber bundle (A) constituted by the carbon fibers of the critical number of single fiber or more satisfies the following expression (2):

$$0.7 \times 10^4/D^2 < N < 1 \times 10^5/D^2 \qquad (2)$$

wherein D is the average fiber diameter ($\mu$m) of single carbon fibers.

It is more preferable that the expression (2) satisfies the following expression (2').

$$0.7 \times 10^4/D^2 < N < 6.0 \times 10^4/D^2 \qquad (2')$$

It is preferred that the average number of fibers (N) in the carbon fiber bundle (A) is larger than $0.7 \times 10^4/D^2$ because a high fiber volume fraction (Vf) is apt to be obtained therewith. Also, it is preferred that the average number of fibers (N) in the carbon fiber bundle (A) is less than $1 \times 10^5$, in particular, less than $6.0 \times 10^4/D^2$ because the composite material or the joint body as a final product is not liable to locally have a thick portion and to form voids.

In the invention, the composite material A has a protrusion part on at least one surface thereof. The one surface having a protrusion part may be a flat surface or a curved surface. It is preferable that the composite material A has at least one flat-surface portion and a protrusion part is formed on the at least one flat-surface portion. It is preferable that the composite material B also has a flat-surface portion for joining to the protrusion part of the composite material A. It is preferable that both composite materials A and B are materials in a sheet form. Those flat-surface portions may be slightly curved so long as joining is possible. It is preferable that the sheet-form composite materials have a thickness in the range of 0.1 mm to 10 mm. However, shapes of such composite materials are not limited to the shapes shown above.

The composite material according to the invention is explained below with respect to sheet-form composite materials as a representative example.

Regarding the composite material, where the carbon fibers are randomly dispersedly arranged in in-plane directions, a composite material can be obtained, which have substantially no in-plane anisotropy of properties, such as strength and elasticity. So long as such composite materials are used and the joining surfaces are parallel with the in-plane directions, a joint body finally obtained is excellent in terms of unidirectional strength and is advantageous in some applications.

<Protrusion part>

A protrusion part having the shape of a projection is formed on at least one surface of the composite material A according to the invention for welding to one surface of the composite material B. This protrusion part preferably is one made of the same material as the composite material A.

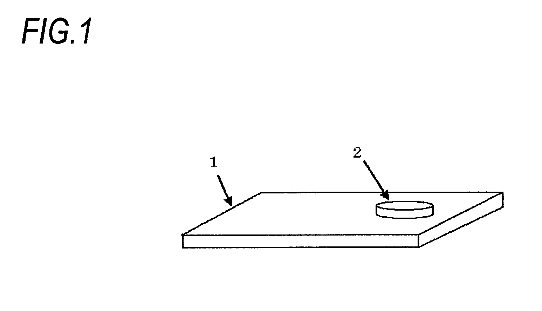

Examples of a shape of the projection include a shape of the protrusion part 2 of the composite material 1 shown in Fig. 1.

The protrusion part in the invention is one which has a size that does not influence the shape and dimension of a product after joining, and is not particularly limited. Examples thereof include the followings.

There are no particular limitations on the shape of the protrusion part, and examples thereof include a cylinder, a prism, a truncated cone, a truncated pyramid, a spherical shape such as a hemisphere, and shapes similar to these. Furthermore, the shape of the protrusion part may be constituted by a combination of those shapes, such as, for example, a cylindrical, prismatic, conical, or pyramidal projection in which the end is rounded (dome type). However, shapes having a sharply tip end, such as a cone and a pyramid, are undesirable because the carbon fibers are not liable to be present in the tip end of the protrusion part.

Where a surface is present in a portion being in contact with an opposite material (composite material B) as a pillar shape and a frustum shape of cone, a shape of the portion being in contact as the joining portion may have a circular, elliptic, polygonal shape, or a shape made up of a combination of straight lines and curved lines, such as ones represented by a fan shape. The tip end shape of the protrusion part being contact with the opposite material (composite material B herein) may have the same surface shape as a joining portion of the composite material B because such a configuration brings about an increased joining area, and thereby facilitates attainment of a good joining strength. For example, it is preferable that when the joining portion of the composite material B is a flat surface, the tip end of the protrusion part also has a flat surface. When the joining portion the composite material B has a shape of a slightly curved surface, it is preferable that the tip end of the protrusion part also has a shape of a similar curved surface.

It is preferable that the base of the protrusion part has an area in the range of 0.25 $mm^2$ to 2,500 $mm^2$. Where the area thereof is 0.25 $mm^2$ or more, this protrusion part is apt to contain carbon fibers. Consequently, joining by current application is rendered easy, which is preferable. With respect to a cross-section of a truncated cone or truncated pyramid, the tip end of the protrusion part of the composite material A which is joined to the composite material B preferably has an area of 0.1 $mm^2$ or more. Where the area of the tip end surface of the protrusion part is 0.1 $mm^2$ or more, the tip end of this protrusion part also is apt to contain carbon fibers and is not liable to include the thermoplastic resin alone. Consequently, the electrical resistance is prevented from increasing, and joining by current application is rendered easy. Therefore, such area is preferred. Furthermore, a plurality of small projections may be formed in each joining portion, and it is preferable in this case that the total area of the tip ends of the projections per a joining portion is adjusted to 0.1 $mm^2$ or more.

The area of a part of the projection which is to be a joining surface is not particularly limited. However, from the standpoint of heating and welding the composite material, it is preferable that the area of the tip end of the protrusion part and the current to be flowed have a relationship therebetween that a current density (=(current value during current application)/(area for joining)) is 0.01 $A/mm^2$ to 100 $A/mm^2$. The current density is more preferably in the range of 0.01 $A/mm^2$ to 10 $A/mm^2$.

There are no limitations on the height of the protrusion part. However, from the standpoint of ease of joining, the height thereof is preferably in the range of 0.01 mm to 20 mm.

The rising angle in the protrusion part is preferably in the range of 0.1° to 89.9° from the standpoint of moldability.

Preferred examples of the protrusion part include a prismatic projection having each side length of 0.1 to 30 mm and a height of 0.5 to 20 mm, a cylindrical projection of $\phi$ 0.1 to 30 (diameter of 0.1 to 30 mm) and having a height of 0.5 to 20 mm, and the like.

Especially preferred examples of the protrusion part include a prismatic projection having each side length of 9 mm and a height of 1 mm, a cylindrical projection of $\phi$ 10 (diameter of 10 mm) and having a height of 1 mm, and the like.

Although the composite material may have one protrusion part on a surface thereof, it is a matter of course that the composite material may have two or more protrusion parts.

[Composite Material B]

A composite material B according to the invention is a member which includes a thermoplastic resin and carbon fibers. Examples of the thermoplastic resin and carbon fibers for the composite material B, the ratio thereof, methods for manufacturing, or the like, are the same as those shown above with regard to the composite material A. In particular, to use the same thermoplastic resin and the same carbon fibers in the composite material B as those in the composite material A is advantageous from the standpoint of production efficiency.

Like the composite material A, the composite material B may have a protrusion part on one surface thereof. In this case, the protrusion part may be present on the side where the composite material B comes into contact with the composite material A or on the opposite side thereof, and this protrusion part can be used as a portion to be joined to the composite material A.

The overall shapes of the composite materials A and B used in the invention are not particularly limited. The shapes of the composite materials A and B may be a sheet form as described above, but are not limited to sheet forms. The shapes thereof may be a plate form. The shapes of the composite materials A and B may include a curved portion. The shapes of the composite materials A and B may be ones having a T-shaped, L-shaped, U-shaped, or hat-shaped cross-section, or may be a three-dimensional shape including these. The method of the invention for joining composite materials can be applied to composite materials having such various shapes.

[Methods for Joining Composite Materials]

Preferred joining methods of the invention are explained below, but the invention is not limited to the following methods.

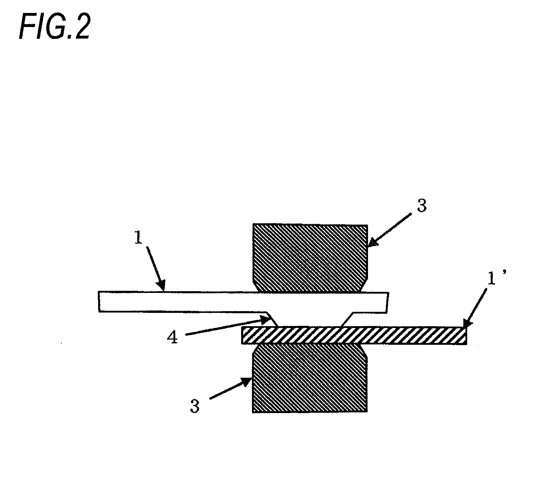

Fig. 2 shows a diagrammatic view of an embodiment for explaining the joining method of the invention, the embodiment being based on a resistance welding. This diagrammatic view shows a joining portion prepared by layering the composite materials A and B so that the protrusion part of the composite material A is faced inward. Numeral 1 denotes the carbon fiber composite material A, 1' denotes the carbon fiber composite material B, 4 denotes a protrusion part present on one surface of the composite material A, and 3 denotes electrodes.

A pair of shaped products is prepared as two composite materials A and B which are to be layered and welded. A projection shape (protrusion part) to be a joining portion are formed on one surface of the composite material A, which is one of the two shaped products.

(Layering Step)

In the joining method of the invention, the composite materials A and B are layered so that the protrusion part of the composite material A faces inward. At this time, the composite material B is in contact with the protrusion part of the composite material A. In the invention, the composite materials A and B are fixed in such a state that the protrusion part of the composite material A is in contact with the composite material B. The fixing is not limited so long as a state where the protrusion part of the composite material A is in contact with the composite material B can be maintained. A known fixing means may be used for the fixing.

It is preferred to press the joining portion which includes the portion where the protrusion part of the composite material A is in contact with the composite material B, as sandwiching the joining portion. It is more preferable that the composite material A is pressed toward the composite material B and the composite material B is pressed toward the composite material A. Where the composite materials A and B are sheets, it is preferred to press the joining portion in the direction perpendicular to the plane of the sheets, i.e., in the thickness direction.

(Current application Step)

Subsequently, in the invention, a current is applied to the joining portion. A preferred method for current application is to sandwich the composite material A and the composite material B between a pair of electrodes and to make a current flow between the electrodes. Although the fixing, pressing, and current application may be conducted using respective means or devices, it is preferred to sandwich, fix and press the composite materials between the electrodes, from the standpoint of process simplification. It is preferable that the fixing of the composite materials is thus conducted by pressing with the electrodes. In the current application step, it is preferable that a current flows from the composite material A via the protrusion part of the composite material A to the composite material B or that a current flows from the composite material B via the protrusion part of the composite material A to the composite material A. The joining portion including the protrusion part is heated by the heat generated by the current application. In the heated joining portion, the thermoplastic resins in the composite materials A and B increase in temperature, shortly melt, and welded. Thereafter, the current application is stopped, and the composite materials are kept being pressed until the joined portion cools sufficiently. The thermoplastic resins are solidified and the protrusion part has become substantially flat. Thus, a shaped product (joint body) in which the composite materials A and B are joined to each other is obtained.

This joining method is not limited so long as the composite materials A and B can be sandwiched and the joining portion can be pressed and subjected to the current application. Where there are a plurality of protrusion parts on a surface of the composite material A, the composite materials are joined to each other at multiple points using the plurality of protrusion parts as a joining portion. Thus, this method is capable of applying composite materials of a complicated shape and various sizes.

An electric power supply to be used for the joining may be an alternating-current power supply or a direct-current power supply. However, the direct-current power supply is preferred when efficient heating is desired.

There are no limitations on material of the electrodes used and a diameter of the electrodes. However, it is preferable that copper or a copper alloy is used as a material. The diameter of each electrode is preferably about from $\phi 3$ (diameter, 3 mm) to $\phi 30$ (diameter, 30 mm). The shapes of the electrodes are not particularly limited, and examples thereof include a rod-shaped or block-shaped electrode.

Since the method of the invention for joining composite materials is a method wherein the matrix resin is melted by Joule's heat to thereby weld the composite materials, it is preferred to control the quantity of electricity in accordance with the melting point of the matrix resin.

A preferred range of values of the current to be flowed during the joining is 1A to 500 A, and a more preferred range thereof is 1A to 200 A. An even more preferred range thereof is 10A to 200 A. The period of the current application is preferably 60 seconds or less, and a substantial lower limit thereof is 0.1 second. Although there are no limitations on the control of the quantity of electricity, examples of the control include a method in which a constant current flows for a certain time period, a method in which current application is conducted so as to result in a certain quantity of electric power, and the like. The pressing pressure to be applied is preferably 0.01 MPa or more, and a substantial condition is a pressing pressure of 1,000 MPa or less. The pressing pressure may be constant or may be increased or reduced in accordance with the process.

[Joint Body]

According to the invention, the thermoplastic resin constituting the protrusion part of the composite material A is heated by the heat generated by the current application and is melted in some cases, and the composite material A is thereby integrally joined to the composite material B to obtain a joint body. As a result of the joining, the protrusion part is flattened and substantially disappeared, and no protrusion part basically remains in the joined portion of the joint body obtained. However, the protrusion part may remain so long as sufficient joining strength is obtained. In some cases, an area surrounding the protrusion part is also heated and contributes to the joining.

Examples

The invention will be explained below by reference to Examples, but the invention should not be construed as being limited to the following Examples. The results of evaluation are shown in Table 1.

[Evaluation Methods]

(Tensile Test)

Ten joint bodies were produced and subjected to a tensile shear test in accordance with JIS K6850 (1999) using universal testing machine 5578, manufactured by Instron Corp., which was of the type installed on the floor and had a capacity of 300 kN. The tensile speed was 1 mm/min. From the ten data obtained, an average value and standard deviation of the breaking loads were calculated. In composite materials in which nylon-6 was used as a matrix resin (Examples 1 to 3 and 6 to 9), a judgement on whether each joint body was acceptable or not was conducted on the basis of the followings.

○: (average value of breaking loads in tensile shear test)-3×(standard deviation of breaking loads in tensile shear test) is 3 kN or more

×: (average value of breaking loads in tensile shear test)-3×(standard deviation of breaking loads in tensile shear test) is less than 3 kN

(Carbon Fiber Bundles)

A ratio of the carbon fiber bundle (A) contained in a composite material was determined in the following manner.

The composite material was cut into a size of 100 mm × 100 mm, and the cut piece was heated in a 500°C oven for about 1 hour to completely remove the resin. Thereafter, all the carbon fiber bundles were taken out with a tweezers, and a length (Li) and a mass (Wi) of each fiber bundle and the number of the fiber bundles (I) were determined. The fiber bundles which were too small to take out with the tweezers were lastly put together and subjected to measurement of the mass (Wk). For the mass measurements, a balance capable of measurement down to 1/100 mg is used.

After the measurements, the following calculations were performed. From the fineness (F) of the carbon fibers used, the number of fibers (Ni) in each fiber bundle was determined using the following expression.

$$\text{Number of fibers (Ni)} = \text{Wi}/(\text{Li}\times\text{F})$$

The average number of fibers (N) in the carbon fiber bundle (A) was determined using the following expression.

$$N = \Sigma Ni/I$$

Furthermore, the ratio (VR) of the carbon fiber bundle (A) to all the fibers was determined from the density (p) of the carbon fibers using the following expression.

$$VR = \Sigma(\text{Wi}/\rho)\times 100/((\text{Wk}+\Sigma\text{Wi})/\rho)$$

[Reference Example 1: Manufacturing of Composite Material]

A carbon fiber bundle (Tenax (registered trademark) STS40 24K, manufactured by Toho Tenax; average fiber diameter, 7 μm) was cut so as to result in an average fiber length of 20 mm. The cut carbon fibers were randomly and dispersedly arranged with hand so as to result in an average fiber areal weight of 980 g/m$^2$, and Unichika Nylon-6, manufactured by Unichika, Ltd., which was treated to be a powder form, was used as a matrix resin. Subsequently, the carbon fibers and the resin were set in a flat mold having a size of 200 mm × 200 mm, so as to result in carbon fiber ratio of 45% by mass and 35% by volume. The fibers and the resin were held at a temperature of 250°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material.

In the composite material obtained, the carbon fibers were randomly oriented and dispersed in in-plane directions. The composite material was substantially isotropic in the directions.

In this composite material, the critical number of single fiber was 86, and the ratio of carbon fiber bundle (A) constituted by the carbon fibers of the critical number of single fiber or more was 35%. The average number of the fibers was 240.

[Reference Example 2: Manufacturing of Composite Material having Circular Protrusion part on Joining surface]

A carbon fiber bundle (Tenax (registered trademark) STS40 24K, manufactured by Toho Tenax; average fiber diameter, 7 μm) was cut so as to result in an average fiber length of 20 mm. Subsequently, the cut carbon fibers were randomly and dispersedly arranged with hand so as to result in an average fiber areal weight of 980 g/m$^2$, and Unichika Nylon-6, manufactured by Unichika, Ltd., which was treated to be a powder form, was used as a matrix resin. The carbon fibers and the resin were thus set in a flat mold having a size of 200 mm × 200 mm, so as to result in carbon fiber ratio of 45% by mass and 35% by volume. The fibers and the resin were held at a temperature of 250°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material. This composite material was manufactured using the mold having a protrusion part with a specific size, and thereby forming a cylindrical protrusion part as shown in Fig. 1. The shape of the protrusion

part was a $\phi$10 (diameter, 10 mm) cylindrical shape having a height of 1 mm (the joining surface was circular). The protrusion part was located at a position which was apart from one end in the longitudinal direction at a distance of 15 mm therefrom and was center in the width direction.

In the composite material obtained, the carbon fibers were randomly oriented and dispersed in in-plane directions. The composite material was substantially isotropic in the directions.

In this composite material, the critical number of single fiber was 86, and the ratio of the carbon fiber bundle (A) constituted by the carbon fibers of the critical number of single fiber or more was 34%. The average number of the fibers was 266.

[Reference Example 3: Manufacturing of Composite Material having Rectangular Protrusion part on Joining surface]

A composite material was manufactured in the same manner as in Reference Example 2, except that a rectangular prismatic protrusion part was provided to a joining surface in which each side had a length of 9 mm was formed in place of the cylindrical protrusion part in the above Reference Example 2. The height of the protrusion part was 1 mm.

In this composite material, the critical number of single fiber was 86, and the ratio of the carbon fiber bundle (A) constituted by the carbon fibers of the critical number of single fiber or more was 34%. The average number of the fibers was 266.

[Comparative Example 1]

(Joining)

The two same composite materials manufactured in accordance with Reference Example 1 were prepared and were trued up along the width direction so that the composite materials overlapped each other in the region ranging from one end in the longitudinal direction to a distance of 25 mm therefrom. A substantially central area of the overlapped portion was sandwiched between $\phi$14 (diameter, 14 mm) copper electrodes at a pressing pressure of 3 kN. Subsequently, a current of 50 A was made to flow between the electrodes for 3 seconds, and the joining portion was thereafter kept being pressed until the joining portion cooled to around room temperature, to obtain a joint body. The current density in that operation was set to 0.33 A/mm$^2$.

(Evaluation)

The results are shown in Table 1. The joint body was examined for tensile shear strength. As a result, the breaking load was 3.9 kN on average, and the standard deviation was 1.43 kN. The joined site of the joint body was separated and examined. As a result, three to five small spots (circular or elliptic spots each having an area of 5 to 50 mm$^2$), where the matrix resin was thought to be welded to join the composite materials, were scatteringly observed within an area with a diameter of about 25mm, in which the portion interposed between the electrodes centered. It is thought that the composite materials obtained in Comparative Example 1 were joined in such a state that the joining portion formed by thermal fusion bonding remained unstable.

[Example 1]

(Joining)

One composite material manufactured in accordance with Reference Example 1 and one composite material manufactured in accordance with Reference Example 2 were prepared, and were trued up along the width direction so that the composite materials overlapped each other in the region ranging from one end in the longitudinal direction to a distance of 25 mm therefrom. At this time, the composite material in which a protrusion part was formed in accordance with Reference Example 2 was arranged so that the protrusion part faced the joining side. The joining portion including the protrusion part was sandwiched between $\phi$14 copper electrodes at a pressing pressure of 3 kN. Subsequently, a current of 50 A was made to flow between the electrodes for 3 seconds, and the joining portion was thereafter kept being pressed until the joining portion cooled to around room temperature. Thus, a joint body was obtained. The protrusion part was disappeared and was flattened. The current density [(current value during current application)/(area of the joining surface in protrusion part)] in that operation was set to 0.63 A/mm$^2$.

(Evaluation)

The joint body obtained was examined for tensile shear strength. As a result, the breaking load was 4.4 kN on average, and the standard deviation was 0.186 kN. The results are shown in Table 1.

[Example 2]

(Joining)

One composite material manufactured in accordance with Reference Example 1 and one composite material manufactured in accordance with Reference Example 3 were prepared, and were trued up along the width direction so that the composite materials overlapped each other in the region ranging from one end in the longitudinal direction to a distance of 25 mm therefrom. At this time, the composite material in which a protrusion part was formed in accordance with Reference Example 3 was arranged so that the protrusion part faced the joining side. The joining portion including the protrusion part was sandwiched between $\phi$14 copper electrodes at a pressing pressure of 3 kN. Subsequently, a current of 50 A was made to flow between the electrodes for 3 seconds, and the joining portion was thereafter kept being pressed until the joining portion cooled to around room temperature. Thus, a joint body was obtained. The protrusion part was disappeared and was flattened. The current density in that operation was set to 0.62 A/mm$^2$.

(Evaluation)

The joint body obtained was examined for tensile shear strength. As a result, the breaking load was 4.1 kN on average, and the standard deviation was 0.206 kN. The results are shown in Table 1.

[Example 3]

(Joining)

A joint body was obtained in the same manner as in Example 1, except that one composite material manufactured in accordance with Reference Example 1 and one composite material manufactured in accordance with Reference Example 2 were prepared and layered and that the electrode diameter was $\phi$16 (diameter, 16 mm).

(Evaluation)

The joint body obtained was examined for tensile shear strength. As a result, the breaking load was 3.9 kN on average, and the standard deviation was 0.234 kN.

[Example 4]

(Manufacturing of Composite Material having no Protrusion part)

Carbon fibers (Tenax (registered trademark) STS40 24K, manufactured by Toho Tenax; average fiber diameter, 7 $\mu$m) which were cut to an average fiber length of 20 mm were randomly and dispersedly arranged with hand so as to result in an average fiber areal weight of 980 g/m$^2$. As a matrix resin, a blend of 96% by mass Prime Polypro J108M, manufactured by Prime Polymer and 4% by mass Toyotac PMAH 1000P, a maleic-anhydride-modified polypropylene manufactured by Toyobo Co., Ltd., which was treated to be a powder form, was used. The carbon fibers and the matrix resin were thus set in a flat mold having a size of 200 mm $\times$ 200 mm, so as to result in carbon fiber ratios of 52% by mass and 35% by volume. The fibers and the resin were held at a temperature of 190°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material.
In the composite material obtained, the carbon fibers were randomly oriented and dispersed in in-plane directions. The composite material was substantially isotropic in the directions.

(Manufacturing of Composite Material having Circular Protrusion part on Joining surface)

Carbon fibers (Tenax (registered trademark) STS40 24K, manufactured by Toho Tenax; average fiber diameter, 7 $\mu$m) which were cut to an average fiber length of 20 mm were randomly and dispersedly arranged with hand so as to result in an average fiber areal weight of 980 g/m$^2$. As a matrix resin, a blend of 96% by mass Prime Polypro J108M, manufactured by Prime Polymer, and 4% by mass Toyotac PMAH 1000P, a maleic-anhydride-modified polypropylene manufactured by Toyobo Co., Ltd. in a powder form was used. The carbon fibers and the matrix resin were thus set in a flat mold having a size of 200 mm × 200 mm, so as to result in carbon fiber ratios of 52% by mass and 35% by volume. The fibers and the resin were held at a temperature of 190°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material. This composite material was manufactured using the mold having a protrusion part with a specific size, thereby forming a protrusion part as shown in Fig. 1. The shape of the protrusion part was a $\phi$10 (diameter, 10 mm) cylindrical shape having a height of 1 mm (the joining surface was circular). The protrusion part was located at the position which was apart from one end in the longitudinal direction at a distance of 15 mm therefrom and was center in the width direction.

In the composite material obtained, the carbon fibers were randomly oriented and dispersed in in-plane directions. The composite material was substantially isotropic in the directions.

(Joining)

The above composite material and the composite material having a circular protrusion part were prepared, and were trued up along the width direction so that the composite materials overlapped each other in the region ranging from one end in the longitudinal direction to a distance of 25 mm therefrom. At this time, the composite material in which a protrusion part was formed was arramged so that the protrusion part faced the joining side. The joining portion including the protrusion part was sandwiched between $\phi$14 copper electrodes at a pressing pressure of 3 kN. Subsequently, a current of 25 A was made to flow between the electrodes for 3 seconds, and the joining portion was thereafter kept being pressed until the joining portions cooled to around room temperature. Thus, a joint body was obtained. The protrusion part was disappeared and was flattened. The current density in that operation was set to 0.32 A/mm$^2$.

(Evaluation)

The joint body obtained was examined for tensile shear strength. As a result, the breaking load was 2.0 kN on average, and the standard deviation was 0.113 kN.

[Example 5]

(Manufacturing of Composite Material having no Protrusion part)

Carbon fibers (Tenax (registered trademark) STS40 24K, manufactured by Toho Tenax; average fiber diameter, 7 $\mu$m) which were cut to an average fiber length of 20 mm were randomly and dispersedly arranged so as to result in an average fiber areal weight of 980 g/m$^2$. As a matrix resin, VALOX resin (resin including polybutylene terephthalate), manufactured by SABIC, which was treated to be in a powder form, was used. The carbon fibers and the matrix resin were thus set in a flat mold having a size of 200 mm × 200 mm, so as to result in carbon fiber ratios of 52% by mass and 35% by volume. The fibers and the resin were held at a temperature of 250°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material.

In the composite material obtained, the carbon fibers were randomly oriented and dispersed in in-plane directions. The composite material was substantially isotropic in the directions.

(Manufacturing of Composite Material having Circular Protrusion part on Joining surface)

Carbon fibers (Tenax (registered trademark) STS40 24K, manufactured by Toho Tenax; average fiber diameter, 7 $\mu$m) which were cut to an average fiber length of 20 mm were randomly and dispersedly arranged so as to result in an average fiber areal weight of 980 g/m$^2$. As a matrix resin, VALOX resin (resin including polybutylene terephthalate), manufactured by SABIC, which was treated to be a powder form, was used. The carbon fibers and the matrix resin were thus set in a flat mold having a size of 200 mm × 200 mm, so as to result in carbon fiber ratios of 52% by mass and 35% by volume. The fibers and the resin were held at a temperature of 250°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material. This composite material was manufactured using the mold having a protrusion part with a specific size, thereby forming a protrusion part as shown in Fig. 1. The shape of the protrusion part was a $\phi$10 (diameter, 10 mm) cylindrical shape having a height of 1 mm (the joining surface was circular). The protrusion part was located at the position which was apart from one end in the longitudinal direction at a distance of 15 mm therefrom and was center in the width direction.

In the composite material obtained, the carbon fibers were randomly oriented and dispersed in in-plane directions. The composite material was substantially isotropic in the directions.

(Joining)

The composite material and the composite material having a circular protrusion part were prepared, and were trued up along the width direction so that the composite materials overlapped each other in the region ranging from one end in the longitudinal direction to a distance of 25 mm therefrom. At this time, the composite material in which a protrusion part was formed was arranged so that the protrusion part faced the joining side. The joining portion including the protrusion part was sandwiched between $\phi$14 copper electrodes at a pressing pressure of 3 kN. Subsequently, a current of 25 A was made to flow between the electrodes for 3 seconds, and the joining portion was thereafter kept being pressed until the joining portion cooled to around room temperature. Thus, a joint body was obtained. The protrusion part was disappeared and was flattened. The current density in that operation was set to 0.32 A/mm$^2$.

(Evaluation)

The joint body obtained was examined for tensile shear strength. As a result, the breaking load was 3.1 kN on average, and the standard deviation was 0.140 kN.

[Example 6]

(Joining)

One composite material manufactured in accordance with Reference Example 1 and one composite material manufactured in accordance with Reference Example 2 were prepared, and were trued up along the width direction so that the composite materials overlapped each other in the region ranging from one end in the longitudinal direction to a distance of 25 mm therefrom. At this time, the composite material in which a protrusion part was formed in accordance with Reference Example 2 was arranged so that the protrusion part faced the joining side. The joining portion including the protrusion part was sandwiched between $\phi$14 copper electrodes at a pressing pressure of 3 kN. Subsequently, a current of 25 A was made to flow between the electrodes for 3 seconds, and the joining portion was thereafter kept being pressed until the joining portion cooled to around room temperature. Thus, a joint body was obtained. The protrusion part was disappeared and was flattened. The current density in that operation was set to 0.32 A/mm$^2$.

(Evaluation)

The joint body obtained was examined for tensile shear strength. As a result, the breaking load was 4.2 kN on average, and the standard deviation was 0.169 kN.

[Example 7]

(Joining)

One composite material manufactured in accordance with Reference Example 1 and one composite material manufactured in accordance with Reference Example 3 were prepared, and were trued up along the width direction so that the composite materials overlapped each other in the region ranging from one end in the longitudinal direction to a distance of 25 mm therefrom. At this time, the composite material in which a protrusion part was formed in accordance with Reference Example 3 was arranged so that the protrusion part faced the joining side. The joining portion including the protrusion part was sandwiched between $\phi$14 copper electrodes at a pressing pressure of 3 kN. Subsequently, a current of 25 A was made to flow between the electrodes for 3 seconds, and the joining portion was thereafter kept being pressed until the joining portion cooled to around room temperature. Thus, a joint body was obtained. The protrusion part was disappeared and was flattened. The current density in that operation was set to 0.31 A/mm$^2$.

(Evaluation)

The joint body obtained was examined for tensile shear strength. As a result, the breaking load was 4.0 kN on average, and the standard deviation was 0.199 kN.

[Example 8]

(Joining)

Two composite materials manufactured in accordance with Reference Example 2 were prepared and layered so that the protrusion parts of the two composite materials were in contact with each other. More specifically, the two composite materials were trued up along the width direction so that the circular joining surfaces of the protrusion parts of the two composite materials met each other and that the composite materials overlapped each other in the region ranging from one end in the longitudinal direction to a distance of 30 mm therefrom. The joining portion including the protrusion parts were sandwiched between $\phi$14 copper electrodes at a pressing pressure of 3 kN. Subsequently, a current of 25 A was made to flow between the electrodes for 3 seconds, and the joining portion was thereafter kept being pressed until the joining portion cooled to around room temperature. Thus, a joint body was obtained. The protrusion parts were disappeared and were flattened. The current density in that operation was set to 0.32 A/mm$^2$.

(Evaluation)

The joint body obtained was examined for tensile shear strength. As a result, the breaking load was 4.6 kN on average, and the standard deviation was 0.238 kN.

[Example 9]

(Manufacturing of Composite Material having Protrusion part with Truncated Cone Shape)

Carbon fibers (Tenax (registered trademark) STS40 24K, manufactured by Toho Tenax; average fiber diameter, 7 $\mu$m) which were cut to an average fiber length of 20 mm were randomly and dispersedly arranged with hand so as to result in an average fiber areal weight of 980 g/m$^2$. As a matrix resin, Unichika Nylon-6, manufactured by Unichika, Ltd., which was treated to be a powder form, was used. The carbon fibers and the matrix resin were thus set in a flat mold having a size of 200 mm $\times$ 200 mm, so as to result in carbon fiber ratios of 52% by mass and 35% by volume. The fibers and the resin were held at a temperature of 250°C for 10 minutes under a pressing pressure of 10 MPa, and the mold was cooled to obtain a composite material. The composite material thus obtained had a thickness of 1.6 mm. Plates each having a length of 100 mm, width of 25 mm, and thickness of 1.6 mm were cut out of the composite material. This composite material was manufactured using the mold having a protrusion part with a specific size, thereby forming a protrusion part with a truncated cone shape. The shape of the protrusion part was a truncated cone which had a height of 1 mm and in which the base had a shape of $\phi$12 (diameter, 12 mm), and the angle between the base in the cross-section of the truncated cone and a direction rising in a vertical direction therefrom was 45 degrees. The protrusion part was located at the position which was apart from one end in the longitudinal direction at a distance of 15 mm therefrom and was center in the width direction.
In the composite material obtained, the carbon fibers were randomly oriented and dispersed in in-plane directions. The composite material was substantially isotropic in the directions.

(Joining)

One composite material manufactured in accordance with Reference Example 1 and one of the above composite material having a truncated-cone-shaped protrusion part were prepared, and were trued up along the width direction so that the composite materials overlapped each other in the region ranging from one end in the longitudinal direction to a distance of 25 mm therefrom. At this time, the composite material in which a protrusion part was formed was arranged so that the protrusion part faced the joining side. The joining portion including the protrusion part was sandwiched between $\phi$14 copper electrodes at a pressing pressure of 3 kN. Subsequently, a current of 25 A was made to flow between the electrodes for 3 seconds, and the joining portion was thereafter kept being pressed until the joining portion cooled to around room temperature. Thus, a joint body was obtained. The protrusion part was disappeared and was flattened. The current density in that operation was set to 0.31 A/mm$^2$.

(Evaluation)

The joint body obtained was examined for tensile shear strength. As a result, the breaking load was 4.2 kN on average, and the standard deviation was 0.255 kN.

Table 1

| | | Comp. Ex. 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Composite material | Matrix resin | PA6 | PA6 | PA6 | PA6 | PP | PBT | PA6 | PA6 | PA6 | PA6 |
| | Vf | 35% | 35% | 35% | 35% | 35% | 35% | 35% | 35% | 35% | 35% |
| | Carbon fiber diameter | 7 $\mu$m | 7 $\mu$m | 7 $\mu$m | 7 $\mu$m | 7 $\mu$m | 7 $\mu$m | 7 $\mu$m | 7 $\mu$m | 7 $\mu$m | 7 $\mu$m |
| | Average fiber length | 20 mm | 20 mm | 20 mm | 20 mm | 20 mm | 20 mm | 20 mm | 20 mm | 20 mm | 20 mm |
| Projection | Shape | none | cylinder (joining surface, circular) | prism (joining surface, rectangular) | cylinder (joining surface, circular) | cylinder (joining surface, circular) | cylinder (joining surface, circular) | cylinder (joining surface, circular) | prism (joining surface, rectangular) | cylinder (B as well is the same) (joining surface, circular) | truncated cone (joining surface, circular) |
| | Area of projection base | - | 78.5 mm$^2$ | 81 mm$^2$ | 78.5 mm$^2$ | 78.5 mm$^2$ | 78.5 mm$^2$ | 78.5 mm$^2$ | 81 mm$^2$ | 81 mm$^2$ | 113 mm$^2$ |
| | Height | - | 1 mm | 1 mm | 1 mm | 1 mm | 1 mm | 1 mm | 1 mm | 1 mm | 1 mm |
| Diameter of electrodes | | $\phi$14 | $\phi$14 | $\phi$14 | $\phi$16 | $\phi$14 | $\phi$14 | $\phi$14 | $\phi$14 | $\phi$14 | $\phi$14 |
| Pressing pressure | | 3 kN | 3 kN | 3 kN | 3 kN | 3 kN | 3 kN | 3 kN | 3 kN | 3 kN | 3 kN |
| Current application conditions | Current value | 50 A | 50A | 50 A | 50 A | 25 A | 25 A | 25 A | 25 A | 25 A | 25 A |
| | Current application period | 3 sec | 3 sec | 3 sec | 3 sec | 3 sec | 3 sec | 3 sec | 3 sec | 3 sec | 3 sec |
| | Current density | 0.33 A/mm$^2$ | 0.63 A/mm$^2$ | 0.62 A/mm$^2$ | 0.63 A/mm$^2$ | 0.32 A/mm$^2$ | 0.32 A/mm$^2$ | 0.32 A/mm$^2$ | 0.31 A/mm$^2$ | 0.32 A/mm$^2$ | 0.31 A/mmm$^2$ |
| Breaking load | Average | 3.9 kN | 4.4 kN | 4.1 kN | 3.9 kN | 2.0 kN | 3.1 kN | 4.2 kN | 4.0 kN | 4.6 kN | 4.2 kN |
| | Standard deviation | 1.43 kN | 0.186 kN | 0.206 kN | 0.234 kN | 0.113 kN | 0.140 kN | 0.169 kN | 0.199 kN | 0.238 kN | 0.255 kN |
| Evaluation | | × | ○ | ○ | ○ | - | - | ○ | ○ | ○ | ○ |

EP 2 799 211 A1

As described above, the joint bodies obtained by the joining method of the invention are ones in which the composite materials have been tenaciously joined to each other serving the protrusion part(s) as a joining portion. Furthermore, the joined sites to be subjected to thermal fusion bonding and the strength thereof were stable, and through an examination of tensile shear strength, the joint body has a smaller value of the standard deviation of breaking load. This reason is presumed that an area where a current was applied is limited or the carbon fibers are oriented in in-plane directions. However, details thereof are unclear.

Industrial Applicability

According to the invention, it is possible to provide a method by which composite materials including a thermoplastic resin and carbon fibers are easily joined to each other to attain high joining strength.

In the invention, a protrusion part having a shape of a projection is formed on a joining portion of the composite materials including the thermoplastic resin and the carbon fibers, and a current is applied to the joining portion including the protrusion part to generate heat thereto. As a result, the composite materials can be easily welded.

While the invention has been described in detail and with reference to specific embodiments thereof, it is apparent to one skilled in the art that various changes and modifications can be made therein without departing from the spirit and scope thereof.

This application is based on a Japanese patent application filed on December 27, 2011 (Application No. 2011-285610), the contents thereof being incorporated herein by reference.

Description of the Reference Numerals and Sign

1:       Composite material A
1':      Composite material B
2, 4:    Protrusion part
3:       Electrode

**Claims**

1.  A method for joining composite materials, the method comprising:

    (i) a step in which a composite material A including a thermoplastic resin and carbon fibers and having a protrusion part on one surface of the composite material A and a composite material B including a thermoplastic resin and carbon fibers are layered and fixed so that the protrusion part of the composite material A faces inward; and
    (ii) a step in which a current is applied to a joining portion including the protrusion part to generate heat.

2.  The method for joining composite materials according to claim 1, **characterized in that** the current application is conducted in a current density range of 0.01 A/mm$^2$ to 100 A/mm$^2$.

3.  The method for joining composite materials according to claim 1 or 2, wherein the fixing of the composite materials is conducted by pressing the composite materials with electrodes.

4.  The method for joining composite materials according to any one of claims 1 to 3,
    **characterized in that** the composite material B has a protrusion part on one surface of the composite material B.

5.  The method for joining composite materials according to any one of claims 1 to 4,
    **characterized in that** the composite materials A and B each have a carbon fiber volume fraction (Vf = 100 $\times$ (volume of carbon fibers)/[(volume of carbon fibers)+(volume of thermoplastic resin)]) of 5 to 80%.

6.  The method for joining composite materials according to any one of claims 1 to 5,
    **characterized in that**, an average fiber length of the carbon fibers in each of the composite materials A and B is 1 mm to 100 mm.

7.  The method for joining composite materials according to any one of claims 1 to 6,

**characterized in that**, in in-plane directions of the surface having the protrusion part of the composite material A, the carbon fibers have been dispersedly arranged so as to be randomly oriented.

8. The method for joining composite materials according to any one of claims 1 to 7, wherein a shape of the protrusion part is at least one shape selected from the group consisting of a cylinder, a prism, a truncated cone, a truncated pyramid, and a hemisphere.

FIG.1

FIG.2

## INTERNATIONAL SEARCH REPORT

| International application No. |
|---|
| PCT/JP2012/083703 |

A. CLASSIFICATION OF SUBJECT MATTER
*B29C65/02*(2006.01)i, *B29K105/06*(2006.01)n, *B29K307/04*(2006.01)n

According to International Patent Classification (IPC) or to both national classification and IPC

B. FIELDS SEARCHED

Minimum documentation searched (classification system followed by classification symbols)
B29C65/02, B29K105/06, B29K307/04

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | JP 2012-187903 A (Tokyo Institute of Technology), 04 October 2012 (04.10.2012), entire text (Family: none) | 1-8 |
| P,A | WO 2012/137985 A1 (Teijin Ltd.), 11 October 2012 (11.10.2012), entire text (Family: none) | 1-8 |
| A | JP 2009-73132 A (Toyota Motor Corp.), 09 April 2009 (09.04.2009), entire text & US 2010/0212823 A1 & EP 2196303 A1 | 1-8 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March, 2013 (05.03.13) | 19 March, 2013 (19.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2012/083703

C (Continuation).    DOCUMENTS CONSIDERED TO BE RELEVANT

| Category* | Citation of document, with indication, where appropriate, of the relevant passages | Relevant to claim No. |
|---|---|---|
| A | JP 62-62733 A  (Somar Corp.),<br>19 March 1987 (19.03.1987),<br>entire text<br>(Family: none) | 1-8 |
| A | JP 3-47735 A  (Kazumasa MORIYA),<br>28 February 1991 (28.02.1991),<br>entire text<br>(Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6170551 A
- JP 2009073132 A
- JP 11300836 A
- JP 2011285610 A